# EUROPEAN PATENT SPECIFICATION

(11) **EP 0 658 153 B1**
(45) Date of publication and mention of the grant of the patent: **18.08.1999**
(21) Application number: 92920795.9
(22) Date of filing: 18.09.1992
(51) Int. Cl.: C05F 17/00, C02F 11/08, B01D 53/34

(54) **METHOD OF NEUTRALIZING AND RECOVERING OF GASES RELEASED FROM WET COMPOSTING OF DOMESTIC ANIMAL MANURE AND/OR SEWAGE MUD**
VERFAHREN ZUR NEUTRALISIERUNG UND WIEDERGEWINNUNG VON AUS DUNG, UND/ODER KLÄRSCHLAMM ENTWICKELTEN GASEN
PROCEDE DE NEUTRALISATION ET DE RECUPERATION DES GAZ EMIS, LORS DU COMPOSTAGE PAR VOIE HUMIDE, DU FUMIER D'ANIMAUX DOMESTIQUES, ET/OU D'EAUX RESIDUAIRES

(30) Priority: 20.09.1991 NO 913701
(43) Date of publication of application: 21.06.1995
(73) Proprietor: TEGLE, Svein, N-4340 Bryne (NO)
(72) Inventor: TEGLE, Svein, N-4340 Bryne (NO)
(74) Representative: Larsen, Hans Ole
(86) International application number: NO9200155
(87) International publication number: WO9306064

(56) References cited:
- EP-A- 0 041 933
- EP-A- 0 361 277
- WO-A-88/07507
- WO-A-90/00162
- DE-B- 2 558 255
- US-A- 4 302 236
- PATENT ABSTRACTS OF JAPAN, Vol. 7, No. 242, C192; & JP,A,58 131 122, publ 1983-08-04 (HITACHI KIDEN KOGYO K.K.).
- PATENT ABSTRACTS OF JAPAN, Vol. 8, No. 41, C211; & JP,A,58 202 018, publ 1983-11-25 (HITACHI KIDEN KOGYO K.K.).

## Description

The present invention relates to a method of neutralizing and recovering of gases released from wet composting of domestic animal manure and/or sewage mud. The invention aims at partly to render harmless, toxic and/or polluting manure gases and sewage gases and similar by preventing respectively reducing their concentrated outlet into the atmosphere, partly to return the gas to a finished composted mass for increasing the nourishing value thereof as manure.

Thus, composted sewage mud and similar masses are in this connection called manure and are used as such.

WO-A1-9 000 162 deals with a composting apparatus for organic waste in which gases discharged from the composting mass are passed through a bio filter. The bio filter comprises loose bio-mass, which comprises composted material and an added microbe stock. Part of the bio filter material is displaced by means of a common rotor/mixer arrangement, to a lower coaxially arranged composting unit during compostation. Thus, the bio filter mass serves both as a filter and as a microbe inoculator for the composting mass in the composting unit.

WO-A1-8 807 507 discloses a process for aerobic fermentive hydrolyses, in particular for composting organic materials, in a closed container in which fresh air is fed into the organic materials. The presence of noxious substances, in particular unpleasant odours in the warm moisture-laden outgoing air, is prevented by use of a fermentation container closed on all sides and by the provision of a heat-exchanger, in which the heat in the outgoing air is absorbed by e heat-transfer medium in order to condense the moisture in the outgoing air. The cool and dried off-gas can be passed through an absorption filter bed of composted and/or active coal.

DE-B2-25 58 255 discloses a method of continuously composting organic waste and/or clearing sludge which as a heap is passed through a closed aeration reactor from its top to its bottom while the total air necessary for the composting process flows counterwise to the heap finely dispersed over the total cross-section thereof from its bottom, which aeration air optionally is humidified with water, while the off-gas leaving the aeration reactor is passed through a clarifying water tank in order to free it from spores, conidia and malodorous substances.

Manuring with composted manure, sewage mud or similar masses admixed manure gases respectively sewage gases and the like will reduce the need for artificial fertilizer in a not inconsiderable degree.

Manure gas and sewage gas are hereinafter used as common terms for the gases here in question.

Thus, manure gas and sewage gas consist of a large number of various gases wherein carbon dioxide, methane, ammonia and hydrogen sulphide are the dominating. The absolutely most dangerous manure gas constituent is hydrogen sulphide (confer manure gas poisoning). Ammonia is usually released in relatively harmless concentrations. However, released ammonia will increase the poisonous effect of hydrogen sulphide when the two gases appear together.

Manure gas and sewage gas are formed in organic material which is demolished under socalled anaerobic conditions, i.e. without access of air. A typical material in this connection is wet manure. The gas is present within the manure partly in the form of small gas bubbles, partly dissolved in the manure liquid. As long as the manure rests, very little manure gas is released; it is first when the manure comes into motion that manure gas is released and rise.

Aerobic fermentation of e.g. manure from domestic animals, socalled wet composting, is effected through continuous or intermittent supply of oxygen to the wet manure. In practice the process involves air admixture during vigorous stirring of the manure, causing a strong increase of temperature and fermentation. Within the raw material, the wet manure, it has already prior to initiated aerobic fermentation been formed some manure gas in dissolved state as well as in the form of small gas bubbles. The gas is released as soon as the manure is put into motion. It is manure gas respectively sewage gas released through wet composting of manure from domestic animals respectively sewage mud and similar masses which are intended neutralized and recovered by means of teh invention.

In order to mix air into e.g. wet manure with wet composting within manure basin, it is known to use an immersed injector through which the manure is pumped using great force. This causes a vigorous stirring of the manure in the basin and provides admixture of air. The air supply and the air admixture are attended to by the nozzle of the injector. This is assigned an air inlet pipe which opens above the manure surface. The through-pumping of manure creates subpressure conditions at the injector nozzle, which thereby through the air inlet pipe sucks air into the manure stream, which is sprayed into the manure basin. This efficient through-airing of the wet manure gives, in combination with the stirring, rise to a favourable temperature increase and acceleration of the fermentation process causing a shortening of the required fermentation time.

This known technique has been acknowledged in the preamble of claim 1.

In the prior art it is known to remove noxious contents of gases from compostation processes through filters such as active compost filters containing a microbe stock. Prior art document WO-A-9 000 162 shows a combined filtering/inoculator distributing composting apparatus for organic waste in which gases discharged from the composting mass are passed through loose bio-mass, which comprises composted material and an added microbe stock.

Document DE-A-2 558 255 deals with conducting warm compostation gases from organic waste and sludge through a basin with activated waste water containing microorganisms, such that the speed of the fermentation processes in the waste water is enhanced.

From a pollution point of view there exists a need for an effective gas retention method and apparatus for wet compostation, and there exists a need for ecologically viable fertilizer products as well.

The objects of the invention are to satisfy these needs. These objects are achieved by the method defined in claim 1.

Thus, the invention consists substantially in taking care of manure gas respectively sewage gas released during wet composting of manure from domestic animals respectively sewage mud, and mix this gas into a finished composted or substantially finished composted manure from domestic animals respectively sewage mud during a manure respectively mud stirring and gas injection process.

A plant for carrying out this method must comprise at least two basins, one for fermentation of raw manure from domestic animals respectively sewage mud, and one for admixture of manure gas respectively sewage gas released in the first basin, into finished or substantially finished composted manure respectively sewage mud. The first basin, the fermentation basin, must be gas-tightly closed, so that released manure gas respectively sewage gas does not escape. When the process starts, finished or substantially finished composted manure from domestic animals respectively sewage mud must be provided within the second basin. Then, when this mass has been supplied and admixed released manure gas respectively sewage gas from the first basin and, thus, has been converted into the desired fertilizer, this may be removed from the second basin, which thereafter may be filled with manure respectively sewage mud from the first basin as soon as this is finished or substantially finished composted. The treatment of the manure respectively the sewage mud will take place intermittent. Suitable wet composting plants for carrying out the invention may be subjected to many constructive modifications within the general scope as defined in the following claims. Thus, it is e.g. possible to use a separate stirrer in order to put finished or substantially finished composted manure respectively sewage mud into motion during the manure gas respectively sewage gas admixture, which in such a case is effected by means of a separate gas injection means. The stirring respectively injection function of these means is, however, preferably effected by a single means, e.g. in the form of a submerged injector having a manure gas respectively sewage gas supply pipe.

Further objects, features and advantages beyond those described in the foregoing will appear from the following specification, reference being made to the enclosed substantially diagrammatical drawing figure illustrating examples of two embodiments of wet composting plants in accordance with the invention and representing a principle sketch for the method according to the invention, and wherein general features of plants appear.

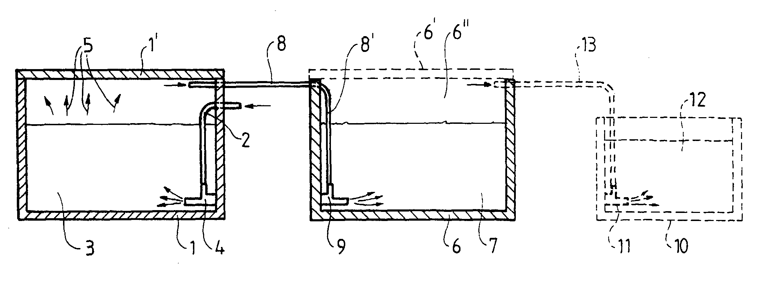

The examplary embodiments relate to wet composting of manure from domestic animals in basins. In the left basin in the figure of the drawing, later called the first basin 1 because the process starts here, aerobic fermentation takes place in known manner, air being supplied through a pipe 2 and conducted into the manure 3 through a submerged injector 4, such as described in the foregoing. As mentioned, the manure 3 is subjected to vigorous stirring movements during admixture of air; this causing a rise of temperature within the manure and an acceleration of the fermentation process, whereby manure gas 5 is released.

The first basin 1, the fermentation basin, is gas-tightly closed by a cover 1'.

The wet composting plant comprises also a second basin 6, which in two alternative embodiments may be upwardly open or gas-tightly closed by a cover 6' (dotted lines). In the second basin 6, finnished or substantially finnished composted manure 7 has been placed.

The first basin 1 and the second basin 6 are uppermost mutually connected by means of a manure gas transfer pipe 8 for the transfer of manure gas 5 from the first basin 1, the fermentation basin, to the second basin 6, or more specifically to an injector 9 submerged into the manure 7. According to the embodiment shown, the manure gas transfer pipe 8 has a vertical downwardly directed portion 8', and this portion 8' is with its lower end connected to the injector 9, which may have the same general construction as the injector 4 within the fermentation basin 1.

The injector 9 within the second basin 6, the manure gas admixing basin, serves to spray supplied manure gas, finely powdering the same, into the finnished or substantially finnished composted manure 7 and, thus, supply valuable nourishing substances to the finnished manure.

Simultaneously, manure gas released during the fermentation process is rendered harmless, concentrated outlet of manure gas being made impossible.

The plant may possibly comprise a third basin 10 (dotted lines) having an injector 11. The third basin 10 which may be filled with water 12 admixed e.g. lime - or the basin 10 may be filled with another suitable liquid - communicates with the gas space 6" of the second basin 6 through a gas transfer pipe 13. The purpose of this arranaement is that any surplus gas from the basin 6 shall have the possibility of flowing further to the third basin 10 for admixture into the lime water 12 by means of the injector 11. The use of such a third basin 10 has in some cases been found to give improved results through optimal utilization of manure gas 5 released in the fermentation basin 1.

Thus, the nitrification process which hithertofore only could take place within the soil, may now take place in a basin.

## Claims

1. A method of neutralizing and recovering of gases released from wet composting of domestic animal manure and/or sewage mud, **characterized** in that wet manure stemming from domestic animal manure and/or sewage mud is aerobically fermented by a wet composting process involving air admixture during vigorous stirring of the wet manure in a first gas-tightly closed basin and conducting the manure or sewage gas released thereby into a second basin containing finished or substantially finished composted manure stemming from a previous wet composting process of wet manure in the first basin, said released manure or sewage gases being mixed into the thus composted wet manure by a manure stirring and gas injection process, thus producing a fertilizer and soil amelioration agent in the form of a finished or substantially finished composted wet manure containing finely dispersed manure and/or sewage gases retained therein.

2. A methoxy according to claim 1, **characterized** in that the manure and/or sewage gases released during the wet composting process of the wet manure are mixed into the finished or substantially finished composted wet manure by means of a separate gas injection means and a separate stirrer for putting the same manure into motion.

3. A method according to claim 1, **characterized** in that the manure and/or sewage gases released during the wet composting process of the wet manure are mixed into the finished or substantially finished composted wet manure by means of a submerged injector having a supply pipe for the manure and/or sewage gases and providing for both the injection of the supplied gases into the composted manure and for the stirring of the composted manure.

4. A method according to claim 1, **characterized** in that the second basin is gas-tightly closed and that the top space thereof serving as gas space communicates with a third basin containing water or other liquid for receiving any residual manure and/or sewage gas released from the composted manure in the second basin.

5. A method according to claim 1, **characterized** in that any residual and/or sewage gas released from the composted manure in the second basin is passed into the liquid of the third basin via a pipe communicating with the top gas space of the second basin at one end and connected with an injector at the other end, said injector being submerged in the liquid in the third basin.

## Patentansprüche

1. Verfahren zum Neutralisieren und Wiedergewinnen von Gasen, welche beim nassen Kompostieren von Haustierdung und/oder Klärschlamm freigesetzt werden,
**dadurch gekennzeichnet**
daß der vom Haustierdung stammende nasse Dung und/oder der Klärschlamm aerobisch durch ein Naßkompostierverfahren fermentiert wird, welches unter starkem Rühren des Naßdungs eine Luftzumischung in einem ersten gasdicht verschlossenen Becken umfaßt und das dabei aus dem Dung oder Klärschlamm freigesetzte Gas in ein zweites Becken geleitet wird, welches fertigen oder weitgehend fertigen kompostierten Dung enthält, der aus dem vorhergehenden Naßkompostierverfahren des nassen Dungs im ersten Becken stammt, wobei die freigesetzten Dung- oder Klärschlammgase in den so kompostierten nassen Dung durch Rühren des Dungs und Einspritzen des Gases gemischt werden, unter Erzeugung eines Düngemittels und eines Mittels zur Verbesserung der Erde in Form eines fertigen oder weitgehend fertigen kompostierten Naßdungs, enthaltend darin fein dispergierte Dung- und/oder Klärschlammgase.

2. Verfahren nach Anspruch 1,
**dadurch gekennzeichnet,**
daß die während dem Naßkompostierverfahren des nassen Dungs freigesetzen Dung- und/oder Klärschlammgase in den fertigen oder weitgehend fertigen kompostierten Naßdung mittels einer separaten Gaseinspritzeinrichtung und einem separaten Rührer zum Bewegen des Dungs, gemischt werden.

3. Verfahren nach Anspruch 1,
**dadurch gekennzeichnet,**
daß die wahrend dem Naßkompostierverfahren des Naßdungs freigesetzten Dung- und/oder Klärschlammgase in den fertigen oder weitgehend fertigen kompostierten Naßdung mittels einer eingetauchten Einspritzeinrichtung mit einem Zufuhrrohr für die Dung- und/oder Klärschlammgase gemischt werden, welche sowohl zum Einspritzen der zugeführten Gase in den kompostierten Dung und zum Rühren des kompostierten Dungs dient.

4. Verfahren nach Anspruch 1,
**dadurch gekennzeichnet,**
daß das zweite Becken gasdicht verschlossen ist und daß der obere Raum als Gasraum dient, der mit einem dritten, Wasser oder eine andere Flüssigkeit enthaltenden Becken zum Aufnehmen von restlichem Dung- und/oder Klärschlammgas, das aus dem kompostierten Dung im zweiten Becken freigesetzt ist, kommuniziert.

5. Verfahren nach Anspruch 1,
**dadurch gekennzeichnet,**
daß jedes restliche Dung- und/oder Klärschlammgas, das aus dem kompostierten Dung im zweiten Becken freigesetzt ist, in die Flüssigkeit des dritten Beckens über ein Rohr geleitet wird, welches mit dem oberen Gasraum des zweiten Bekkens kommuniziert und mit einer Einspritzvorrichtung am anderen Ende verbunden ist, wobei die Einspritzvorrichtung in die Flüssigkeit des dritten Beckens eintaucht.

## Revendications

1. Procédé de neutralisation et de récupération des gaz émis lors du compostage par voie humide du fumier d'animaux domestiques et/ou d'eaux résiduaires, caractérisé en ce que le fumier humide provenant d'animaux domestiques et/ou d'eaux résiduaires est fermenté par voie aérobie selon un procédé de compostage par voie humide impliquant l'introduction d'air sous agitation vigoureuse du fumier humide dans un premier bassin clos d'une manière étanche aux gaz, et le transfert du gaz de fumier ou d'eaux résiduaires ainsi émis, dans un deuxième bassin contenant du fumier composté fini ou substantiellement fini provenant d'un processus précédent de compostage par voie humide de fumier humide dans le premier bassin, lesdits gaz de fumier ou d'eaux résiduaires ainsi émis étant mélangés au fumier ainsi composté par voie humide par un processus d'agitation du fumier et d'injection de gaz, produisant ainsi un engrais et un agent d'amélioration de sol sous la forme d'un fumier humide composté fini ou substantiellement fini contenant des gaz de fumier et/ou d'eaux résiduaires, finement dispersés, retenus en son sein.

2. Procédé selon la revendication 1, caractérisé en ce que les gaz de fumier et/ou d'eaux résiduaires émis au cours du processus de compostage par voie humide du fumier humide sont mélangés au fumier humide composté fini ou substantiellement fini au moyen d'une injection de gaz séparée et d'une agitation séparée afin de mettre ledit fumier en mouvement.

3. Procédé selon la revendication 1 caractérisé en ce que les gaz de fumier et/ou d'eaux résiduaires émis au cours du processus de compostage par voie humide du fumier humide sont mélangés au fumier humide composté fini ou substantiellement fini au moyen d'un injecteur immergé ayant un tuyau d'alimentation pour les gaz de fumier et/ou d'eaux résiduaires et assurant à la fois l'injection des gaz introduits dans le fumier composté et l'agitation du fumier composté..

4. Procédé selon la revendication 1 caractérisé en ce que le deuxième basin est clos d'une manière étanche aux gaz et que l'espace supérieur de celui-ci servant d'espace pour les gaz communique avec un troisième bassin contenant de l'eau ou un autre liquide pour la réception de tout gaz résiduel de fumier et/ou d'eaux résiduaires émis provenant du fumier composté dans le deuxième bassin.

5. Procédé selon la revendication 1 caractérisé en ce que tout gaz résiduel et/ou d'eaux résiduaires émis provenant du fumier composté dans le deuxième bassin est passé dans le liquide du troisième bassin par l'intermédiaire d'un tuyau communiquant avec l'espace supérieur de gaz du deuxième bassin à une extrémité, et relié à un injecteur à l'autre extrémité, ledit injecteur étant immergé dans le liquide du troisième bassin.
